# DEMANDE DE BREVET EUROPEEN

(11) **EP 3 104 066 A1**
(43) Date de publication de la demande: **14.12.2016**
(21) Numéro de dépôt: 16173758.0
(22) Date de dépôt: 09.06.2016
(51) Int. Cl.: F21S 8/10, B29C 45/16, F21V 3/02, B29D 11/00, F21W 101/14

(54) **GLACE POUR DISPOSITIF D'ÉCLAIRAGE ET SON PROCÉDÉ DE FABRICATION**

(30) Priorité: 12.06.2015 FR 1555374
(71) Demandeur: VALEO VISION, 93012 Bobigny Cedex (FR)
(72) Inventeur: COLOMBEL, Jean-Marc, 49430 LES RAIRIES (FR); ALTERMATT, Guillaume, 49000 ANGERS (FR); MENORET, Romain, 49000 ANGERS (FR)

(57) **Abrégé**

Une glace selon l'invention destinée à fermer une ouverture d'un boîtier du dispositif d'éclairage et/ou de signalisation d'un véhicule automobile. La glace comprend une première couche 5 et une dent de montage 6 issue de la première couche, la dent de montage 6 étant destinée à coopérer avec une nervure périphérique délimitant l'ouverture, et elle comprend une deuxième couche 8 couvrant la première couche 5 au moins au droit de la dent de montage 6. Une première épaisseur E1 de la première couche 5 est mesurée au droit de la dent de montage 6 et une deuxième épaisseur E2 de la première couche 5 est mesurée à côté de la dent de montage 6. La première épaisseur E1 est supérieure ou égale à la deuxième épaisseur E2.

## Description

La présente invention a pour objet une glace d'un dispositif d'éclairage et/ou de signalisation pour véhicule automobile, ladite glace étant destinée à fermer une ouverture d'un boîtier du dispositif d'éclairage et/ou de signalisation par l'intermédiaire d'une dent de montage logée dans une nervure du boitier.

L'invention définit également un dispositif d'éclairage et/ou de signalisation ainsi qu'un procédé de fabrication d'une glace de dispositif d'éclairage et/ou de signalisation.

De façon classique, les glaces de dispositif d'éclairage et/ou de signalisation sont réalisées par une méthode d'injection, en particulier par bi-injection lorsque l'on souhaite l'obtention de glace bi-couleur. Une glace d'un dispositif d'éclairage et/ou de signalisation présente une face extérieure destinée à être visible une fois la glace mise en place sur le boitier du dispositif d'éclairage et/ou de signalisation et une face intérieure présentant des reliefs tels qu'une dent de montage destinée à se loger dans une nervure du boitier. Dans les glaces de l'art antérieur, un plan d'extension de la dent de montage s'étend perpendiculairement au plan de la face extérieure de la glace.

La face extérieure doit être plane, les constructeurs automobiles ne tolérant aucune aspérité à la surface de la face extérieure du dispositif d'éclairage. Cependant, les glaces injectées comportant des dents de montages sont exposées à un risque de défauts.

En premier lieu, il existe un risque important de retassure qui est un défaut se constatant dans les parties massives des pièces coulées quand la solidification et la contraction du matériau entraînent la formation d'une cavité. Ainsi le problème de retassure se rencontre dans une zone au droit d'une dent de montage venue de matière. Le risque de retassure est d'autant plus amplifié avec l'inclinaison du plan de la dent par rapport au plan de la glace.

L'invention a pour but de remédier à l'inconvénient énoncé précédemment, notamment en proposant une glace réalisée par superposition d'au moins deux couches et de laquelle est issue une dent de montage. L'invention permet tout particulièrement de réaliser une dent de montage inclinée par rapport au plan de la glace.

L'invention a tout d'abord pour objet une glace pour dispositif d'éclairage et/ou de signalisation. La glace est destinée à fermer une ouverture d'un boitier du dispositif d'éclairage et/ou de signalisation, elle comprend une première couche et une dent de montage issue de la première couche. La dent de montage est destinée à coopérer avec une nervure périphérique délimitant l'ouverture. Une deuxième couche vient couvrir la première couche au moins au droit de la dent de montage. Une première épaisseur de la première couche mesurée au droit de la dent de montage est supérieure ou égale à une deuxième épaisseur de la première couche mesurée à côté de la dent de montage.

Une des caractéristiques avantageuses de l'invention pour résoudre le problème de retassure est l'injection d'une surépaisseur de la première couche au droit de la dent de montage. Cette surépaisseur de la première couche permet d'éviter l'ajout, lors de l'injection de la deuxième couche, d'une quantité supplémentaire importante au niveau de la retassure de la première couche et qui aurait comme conséquence de reporter le problème de retassure sur la deuxième couche, au droit de la dent de montage. Cette retassure serait dès lors visible sur la face extérieure de la glace.

Ainsi la surépaisseur au droit de la dent de montage recouverte du surmoulage surmonte les défauts inhérents au moulage et permet l'obtention d'une face extérieure plane et parfaitement lisse au droit de la dent de montage.

D'autres caractéristiques optionnelles de la glace selon l'invention, qui peuvent être mises en oeuvre de façon combinée ou alternative, sont indiquées ci-après.

On notera qu'une première zone de la première couche porte la dent de montage et celle-ci est délimitée par deux droites. La mesure de la première épaisseur est effectuée dans la première zone délimitée alors que la mesure de la deuxième épaisseur est réalisée en dehors de la première zone. C'est par ce moyen que la surépaisseur peut être constatée sur une glace de dispositif d'éclairage et/ou de signalisation.

Par ailleurs, la dent de montage est inclinée par rapport au plan de la première couche. Cette dent de montage s'étend donc selon une direction longitudinale et la première couche s'étend selon une autre direction. La direction longitudinale et la direction de la première couche forment un angle non-perpendiculaire, notamment compris entre 1° et 89° ou un angle compris entre 91° et 179°. Avantageusement, cet angle est compris entre 10° et 80° ou entre 100° et 170°.

La première épaisseur de la première couche de la glace est comprise dans une plage de valeurs de 1.15 à 1.25 fois supérieur à la deuxième épaisseur de la première couche. On notera que la variation d'épaisseur entre la première épaisseur et la deuxième épaisseur peut être progressive, notamment de manière linéaire.

Selon un aspect de l'invention, la deuxième couche couvre intégralement la première couche, notamment en adhérant intégralement sur une face de la première couche, opposée à la dent de montage.

La première couche et/ou la deuxième couche de la glace peut être réalisée dans un matériau choisi parmi le polyméthacrylate de méthyle, l'acrylonitrile butadiène styrène et le polycarbonate.

De manière optionnelle, la deuxième couche de la glace est translucide, c'est-à-dire présentant des propriétés aptes à transmettre de la lumière de manière diffuse.

Selon un exemple de l'invention, une portion de glace, de même matériau que celui de la première couche et distincte de celle-ci est jointe bord à bord avec la deuxième couche formant la glace. La portion de glace peut éventuellement être translucide. De telles dispositions permettent de former au cours d'une même étape d'injection à la fois la première couche, mais également la portion distincte de la glace utilisée pour une fonction de signalisation. Par exemple, la première couche et la portion peuvent être réalisées en un matériau jaune, utilisé pour l'indicateur de direction.

Dans un mode de réalisation particulier, la portion de glace se distingue de la première couche équipée de sa dent de montage par un espace libre. Dans ce mode de réalisation la deuxième couche s'étend entre la portion de glace à la première couche de sorte que la portion de glace et la première couche ne soit pas en contact direct l'une avec l'autre.

Selon des exemples de l'invention non limitatifs, la portion de glace peut correspondre à un indicateur de direction ou un feu de recul. La glace à l'exception de la portion peut correspondre à un feu stop ou à une lanterne, autrement appelée lampe de ville. Les différents matériaux utilisés pour la première et la seconde couche peuvent se distinguer par exemple et de manière non-limitative par leurs couleurs respectives qui peuvent correspondre à des fonctions d'éclairage ou de signalisation différentes.

L'invention définit également un dispositif d'éclairage et/ou de signalisation qui comprend une source de lumière et un boîtier possédant une ouverture par laquelle un faisceau lumineux généré par la source de lumière sort du dispositif d'éclairage et/ou de signalisation, ladite ouverture étant fermée par une glace précédemment exposée. Un mode de réalisation est possible selon lequel la dent de montage est soudée dans la nervure périphérique du boîtier.

Selon un exemple de l'invention, le dispositif d'éclairage et/ou de signalisation est un feu arrière de véhicule automobile.

L'invention concerne également un procédé de fabrication d'une glace destinée à fermer une ouverture d'un boîtier d'un dispositif d'éclairage et/ou de signalisation, qui comprend :
- une première couche injectée de sorte à créer une surépaisseur au droit d'une dent de montage destinée à se loger dans une nervure périphérique délimitant l'ouverture,
- une deuxième couche injectée recouvrant la première couche au moins au droit de la dent de montage.

Le procédé à la caractérisation avantageuse d'aplanir la surépaisseur de la première couche lorsque la deuxième couche est injectée.

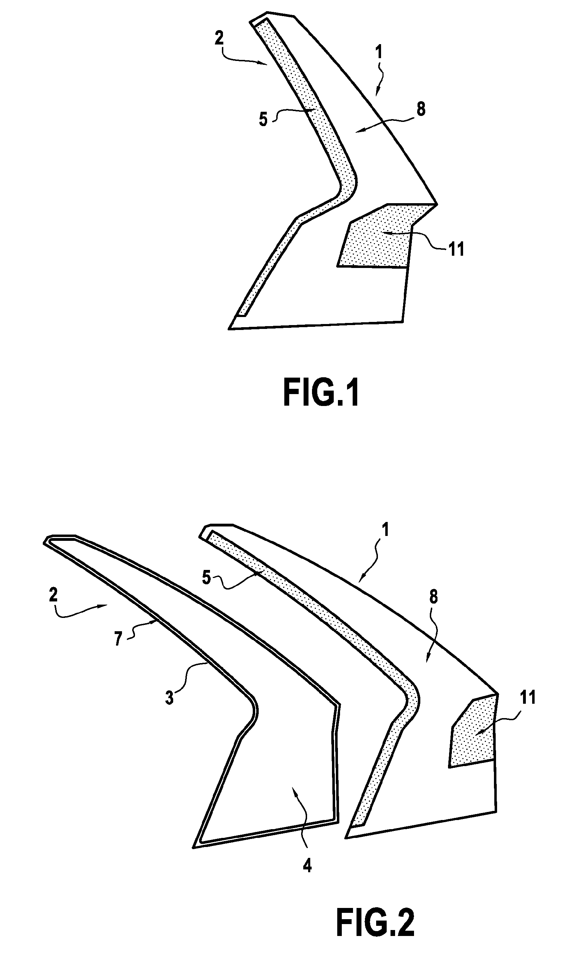

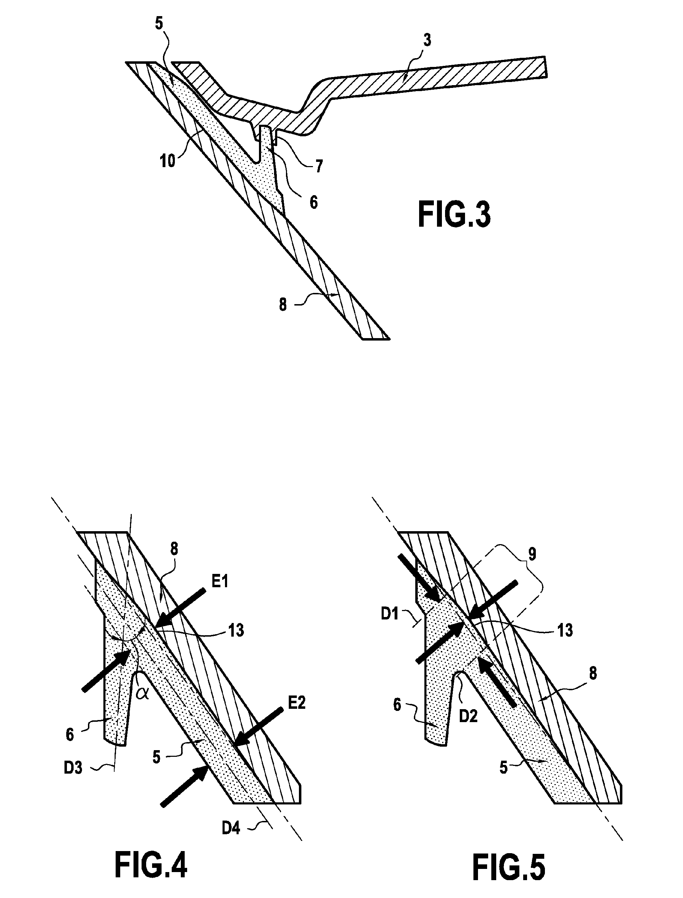

D'autres caractéristiques, détails et avantages de l'invention ressortiront plus clairement à la lecture de la description donnée ci-après à titre indicatif en relation avec des dessins dans lesquels :
o la figure 1 est une vue extérieure de la glace d'un dispositif d'éclairage et/ou de signalisation selon l'invention,
o la figure 2 est une vue éclatée du dispositif d'éclairage et/ou de signalisation, où le boitier ainsi que la glace sont visibles,
o la figure 3 est une vue en coupe de la glace comportant la dent de montage coopérant avec le boitier du dispositif d'éclairage et/ou de signalisation,
o les figures 4 et 5 sont des vues en coupe illustrant tout particulièrement la surépaisseur ménagée sur la première couche.
Dans les caractéristiques exposées ci-dessus et dans la description ci-après, les termes relatifs à la direction longitudinale, l'horizontalité, la transversalité, ainsi que les termes face extérieure et face intérieure s'entendent par rapport à la position dans laquelle la glace du dispositif d'éclairage et/ou de signalisation est destinée à être montée.

Le terme « dent de montage » désigne une saillie ou excroissance de la première couche injectée permettant, lors du montage, le positionnement de la glace grâce à la coopération de la dent de montage avec une nervure du boitier du dispositif d'éclairage et/ou de signalisation. Et enfin, « glace bicouche » désigne une glace qui est constituée de deux couches directement superposées.

Il faut tout d'abord noter que les figures exposent l'invention de manière détaillée pour mettre en oeuvre l'invention, lesdites figures pouvant bien entendu servir à mieux définir l'invention le cas échéant.

En se référant tout d'abord à la figure 1, on voit une représentation de la glace 1 du dispositif d'éclairage et/ou de signalisation 2. La glace 1 est destinée à fermer une ouverture d'un boîtier 3 constitutif du dispositif d'éclairage et/ou de signalisation 2. La glace 1 est formée par la combinaison d'une première couche 5 et d'une deuxième couche 8. Cette figure illustre également un mode de réalisation possible selon laquelle la glace bicouche 1 comprend une portion 11 de glace 1 de même matériau que celui de la première couche 5. Celle-ci est par exemple jointe bord à bord avec la deuxième couche 8 de la glace 1.

Ainsi, une face extérieure de la glace est reconnaissable en ce qu'elle comprend la portion 11 de glace formée par le même matériau que la première couche 5, alors que le restant de la glace 1 est formé par la deuxième couche 8. La portion 11 de glace et le restant de la glace peuvent être distinctement différentiable par leur couleur, leur opacité, leur texture externe ou interne, par exemple. Selon un mode de réalisation, la glace 1 peut comporter une portion 11 qui est séparée de la première couche 5 équipée de sa dent de montage 6. Dans ce mode de réalisation la portion 11 est jointe par l'intermédiaire de la deuxième couche 8 à la première couche 5 équipée de la dent de montage 6. Autrement formulé, la deuxième couche s'étend entre la portion 11 de glace 1 et la première couche 5.

Dans les variantes illustrées, la glace 1 est délimitée périphériquement par une pluralité d'arêtes. La première couche 5 et la deuxième couche 8 se superposent intégralement tout le long d'au moins une des arêtes qui délimitent la glace 1. Selon l'exemple de réalisation, l'arête où les deux couches se superposent est celle qui longe une aile arrière du véhicule apte à recevoir le dispositif d'éclairage et/ou de signalisation 2 équipé de la glace 1.

La glace 1 illustrée sur la figure 1 pourra être destinée à un usage de feu arrière de véhicule, avantageusement un feu arrière côté conducteur, pour une conduite à gauche. Bien entendu, l'invention s'applique également à un feu arrière droit, selon le même référentiel.

La glace peut avoir l'avantage de comporter différentes fonctions d'éclairage et/ou de signalisation grâce à la présence d'au moins une portion 11 de glace 1 se distinguant du restant de la glace. La deuxième couche 8 et/ou la portion 11 de glace 1 peuvent être translucide. La portion 11 de glace 1 pourra correspondre à un indicateur de direction ou un feu de recul. La glace 1, à l'exception de la portion 11 de glace 1, pourra correspondre à un feu stop ou à une lanterne, autrement appelée lampe de ville ou feu de position. Les différents matériaux utilisés pour la première et la seconde couche peuvent se distinguer, par exemple et de manière non-limitative, par leurs couleurs respectives afin d'avoir des fonctions d'éclairage ou de signalisation distinctes.

La figure 2 illustre le dispositif d'éclairage et/ou de signalisation 2 en vue éclatée, comprenant une source de lumière (non illustrée) et un boîtier 3 possédant une ouverture 4 par laquelle un faisceau lumineux (non illustré) généré par la source de lumière sort du dispositif d'éclairage et/ou de signalisation 2. Le boîtier 3 est fermé par la glace 1 illustrée précédemment dans la figure 1. Ledit boîtier 3 comprend une nervure périphérique 7 qui délimite l'ouverture 4 et qui fait office également de moyen de fixation de la glace 1 sur le boîtier 3 par coopération avec la dent de montage 6 venue de matière avec la première couche 5 de la glace 1.

La vue en coupe de la figure 3 illustre la coopération entre la glace 1 et le boîtier 3. La dent de montage 6 issue de la première couche 5 est destinée à coopérer avec la nervure périphérique 7 sur l'arête délimitant l'ouverture 4 du boitier 3 du dispositif d'éclairage et/ou de signalisation 2. La deuxième couche 8 couvre la première couche 5 au moins dans la zone de coopération entre la dent de montage 6 et la nervure périphérique 7. Un exemple de réalisation est possible selon laquelle la deuxième couche 8 adhère intégralement sur la face 10 de la première couche 5 opposée à la dent de montage 6. La deuxième couche 8 peut couvrir intégralement la première couche 5.

Les figures 4 et 5 sont des vues en coupe illustrant tout particulièrement une surépaisseur 13 ménagée sur la première couche 5.

Sur la figure 4, la glace 1 comprend la première couche 5 et la dent de montage 6 issue de la première couche 5. La deuxième couche 8 couvre la première couche 5 au moins au droit de la dent de montage 6. La dent de montage s'étend selon la direction longitudinale D3. Cette direction longitudinale D3 correspond à la direction de l'axe le plus long de la dent de montage en passant par son centre.

La première couche 5 s'étend selon une direction D4 représentée en pointillés qui passe au centre d'une épaisseur E2, située à l'extérieure d'une zone 9 correspondant à une zone de surépaisseur de la première couche 5 au droit de la dent de montage. La direction longitudinale D3 et la direction D4 forment un angle α, la mesure de cet angle permettant d'apprécier le niveau d'inclinaison de la dent de montage par rapport au plan de la glace. Dans un exemple de réalisation, l'angle α peut-être compris entre 1° et 89° ou entre 91° et 179°. Dans un autre exemple de réalisation, l'angle α est compris entre 10° et 80° ou entre 100° et 170°.

La zone 9 correspondant à la zone de surépaisseur de la première couche 5 est délimitée par deux droites représentées D1, D2. Les droites D1 et D2 sont avantageusement parallèles entre elles. Elles sont transversales à la première couche 5 et passent chacun par un pied délimitant la dent de montage, un tel pied étant la partie de la première couche 5 où la dent de montage prend naissance.

En se reportant à la figure 4, la première couche 5 présente différentes épaisseurs. On notera une première épaisseur E1 de la première couche 5 mesurée dans la première zone 9 comprise entre les droites D1 et D2, au droit de la dent de montage 6 qui correspond à la zone de surépaisseur de la première couche 5. Une deuxième épaisseur E2 de la première couche 5 est mesurée à côté de la dent de montage 6, en dehors de la zone 9, tel que représentée sur la figure. La première épaisseur E1 est supérieure ou égale à la deuxième épaisseur E2 de la première couche 5. Selon un exemple de réalisation, la première épaisseur E1 est égale de 1.15 à 1.25 fois la deuxième épaisseur E2.

La mesure de la variation d'épaisseur de la première couche permet d'apprécier la surépaisseur injectée au droit de la dent de montage afin de supprimer le problème de retassure. Comme illustré, la variation d'épaisseur entre la première épaisseur E1 et la deuxième épaisseur E2 peut-être progressive. Ceci permet de ne pas avoir d'arête tranchante qui pourrait fragiliser la première couche et qui pourrait faire des marques visibles sur la face extérieure de la glace. Un lissage de la surépaisseur est facilité par l'écrasement de l'excédent de matière de la première couche pendant le processus d'injection de la matière correspondant à la deuxième couche.

La glace 1 est destinée à fermer l'ouverture 4 du boîtier 3. Le procédé de fabrication de la glace 1 comprend l'injection d'une première couche 5 de sorte à créer une surépaisseur 13 au droit de la dent de montage 6, puis l'injection d'une deuxième couche 8 recouvrant la première couche au moins au droit de la dent de montage. Ladite dent de montage 6 est destinée à se loger dans la nervure périphérique 7 délimitant l'ouverture 4. Le procédé permet avantageusement d'aplanir la surépaisseur 13 de la première couche 5 lorsque la deuxième couche 8 est injectée. Ainsi fabriquée, la glace ne présente pas de défaut ni de retassure au droit de la dent de montage.

L'invention n'est pas limitée aux modes de réalisation décrits mais s'étend à tout mode de réalisation conforme dans son esprit.

## Revendications

1. Glace (1) d'un dispositif d'éclairage et/ou de signalisation (2) destinée à fermer une ouverture (4) d'un boîtier (3) du dispositif d'éclairage et/ou de signalisation, comprenant :
- une première couche (5) et une dent de montage (6) issue de la première couche, la dent de montage (6) étant destinée à coopérer avec une nervure périphérique (7) délimitant l'ouverture (4),
- une deuxième couche (8) couvrant la première couche (5) au moins au droit de la dent de montage (6), dans laquelle une première épaisseur (E1) de la première couche (5) mesurée au droit de la dent de montage (6) est supérieure à une deuxième épaisseur (E2) de la première couche (5) mesurée à côté de la dent de montage (6).

2. Glace selon la revendication 1, dans laquelle une première zone (9) de la première couche (5) portant la dent de montage (6) est délimitée par deux droites (D1, D2), la mesure de la première épaisseur (E1) étant effectuée dans la première zone (9) comprise entre ces deux droites (D1, D2), alors que la mesure de la deuxième épaisseur (E2) est réalisée en dehors de la première zone (9).

3. Glace selon l'une quelconque des revendications précédentes, dans laquelle la dent de montage (6) s'étend selon une direction longitudinale (D3) et la première couche (5) s'étend selon une direction (D4), la direction longitudinale (D3) et la direction (D4) forment un angle (α) non-perpendiculaire.

4. Glace selon l'une quelconque des revendications précédentes, dans laquelle la première épaisseur (E1) est égale de 1.15 à 1.25 fois la deuxième épaisseur (E2).

5. Glace selon l'une quelconque des revendications précédentes, dans laquelle une variation d'épaisseur entre la première épaisseur (E1) et la deuxième épaisseur (E2) est progressive.

6. Glace selon l'une quelconque des revendications précédentes, dans laquelle la deuxième couche (8) couvre intégralement la première couche (5).

7. Glace selon l'une quelconque des revendications précédentes, dans laquelle la deuxième couche (8) adhère intégralement sur une face (10) de la première couche (5).

8. Glace selon l'une quelconque des revendications précédentes, dans laquelle la première couche (5) et/ou la deuxième couche (8) est réalisée dans un matériau choisi parmi le polyméthacrylate de méthyle, l'acrylonitrile butadiène styrène et le polycarbonate.

9. Glace selon l'une quelconque des revendications précédentes, dans laquelle la deuxième couche (8) est translucide.

10. Glace selon l'une quelconque des revendications précédentes, dans laquelle une portion (11) de la glace (1), de même matériau que celui de la première couche (5) et distincte de celle-ci, est jointe bord à bord avec la deuxième couche (8) de glace (1).

11. Glace selon la revendication 10, **caractérisé en ce que** la portion (11) de la glace (1) est translucide.

12. Glace selon l'une quelconque des revendications 10 ou 11, dans laquelle la portion (11) est séparée de la première couche (5) équipée de sa dent de montage (6).

13. Dispositif d'éclairage et/ou de signalisation (2) comprenant une source de lumière et un boîtier (3) possédant une ouverture (4) par laquelle un faisceau lumineux généré par la source de lumière sort du dispositif d'éclairage et/ou de signalisation (2), ladite ouverture (4) étant fermée par une glace (1) selon l'une quelconque des revendications précédentes.

14. Dispositif d'éclairage et/ou de signalisation selon la revendication 13, dans lequel la dent de montage (6) est soudée dans la nervure périphérique (7) du boîtier (3).

15. Dispositif d'éclairage et/ou de signalisation selon l'une quelconque des revendications 13 ou 14, dans lequel le dispositif est un feu arrière de véhicule automobile.

16. Procédé de fabrication d'une glace (1) destinée à fermer une ouverture (4) d'un boîtier (3) d'un dispositif d'éclairage et/ou de signalisation (2), comprenant :
- une première couche (5) injectée de sorte à créer une surépaisseur (13) au droit d'une dent de montage (6) destinée à se loger dans une nervure périphérique (7) délimitant l'ouverture (4),
- une deuxième couche (8) injectée recouvrant la première couche (5) au moins au droit de la dent de montage (6).

17. Procédé de fabrication d'une glace selon la revendication 16, **caractérisé en ce que** la surépaisseur (13) de la première couche (5) est aplanit quand la deuxième couche (8) est injectée.
